# EUROPEAN PATENT APPLICATION

(11) **EP 4 282 870 A1**
(43) Date of publication of application: **29.11.2023**
(21) Application number: 22174807.2
(22) Date of filing: 23.05.2022
(51) Int. Cl.: C07G 1/00, C08H 7/00, C08L 63/10, C08G 59/18

(54) **LIGNIN-DERIVED CYCLOCARBONATE MONOMERS**

(71) Applicant: VITO NV, 2400 Mol (BE); New Zealand Forest Research Institute Limited, Rotorua (NZ)
(72) Inventor: Vendamme, Richard, 2400 Mol (BE); Feghali, Elias, 2400 Mol (BE); Quinsaat, Jose Enrico Quijano, Rotorua (NZ); Torr, Kirk M., Rotorua (NZ)
(74) Representative: Arnold & Siedsma

(57) **Abstract**

In general, the present invention relates to lignin-derived monomers, as well as polymers prepared with these lignin-derived monomers. Furthermore, the invention relates to methods to prepare these monomers from feedstock rich in lignin, such as lignocellulosic biomass, as well as methods to prepare polymers with the obtained monomers.

## Description

### FIELD OF THE INVENTION

In general, the present invention relates to lignin-derived monomers, as well as polymers prepared with these lignin-derived monomers. Furthermore, the invention relates to methods to prepare these monomers from feedstock rich in lignin, such as lignocellulosic biomass, as well as methods to prepare polymers with the obtained monomers.

### BACKGROUND TO THE INVENTION

Polyurethanes (PUs) are well-known and versatile materials which can be found in a wide range of applications such as adhesives, coatings, sealants, flame retardants, elastomers, or insulation. PUs are typically produced by reaction of a polyol with an multifunctional isocyanate leading to the formation of urethane linkages. Historically, both the polyol and isocyanate components are petroleum-based, while in more recent times, more environmentally sustainable approaches to form PUs have emerged.

Replacing petroleum-based polyols with biobased polyols has received considerable attention. Biobased polyols that have been successfully used in preparing PU materials with high thermal stability and mechanical resilience, are for instance derived from vegetable oils (e.g. castor oil, soy bean oil, and tung oil), sugar derivatives and other biopolymers such as lignin. Due to its high content of hydroxyl groups (both aliphatic and aromatic), lignin has been pursued as polyol replacement in the synthesis of various polymers. However, lignins derived from cellulose isolation, also known as technical lignins, have a high molecular weight and polydispersity due to the condensation that takes place in the harsh reaction conditions of cellulose isolation. As a result, these type of lignins typically lead to poor performance polymers. Lignin-based PUs have largely been produced from technical lignins produced from Kraft and organosolv pulping of lignocellulosic biomass. Functional group modifications or depolymerisation have been used to improve the compatibility and reactivity of these lignins in PU formulations, ultimately leading to improved properties of the resulting materials. Recent work of the applicants has shown that depolymerised native softwood lignin can be used to improve the compression strength of partially bio-based PU foams. Examples of mild fractionation and/or depolymerization conditions and strategies to stabilize the intermediates formed during depolymerization lead to mixtures rich in lignin monomers (Chem. Rev. 2018 118, 614; Chem. Soc. Rev. 2018, 47, 852). These monomers can be divided into two big categories depending on the terminal group on the alkyl chain: 4-alkylphenols and 4-hydroxylalkylphenols.

Compared to the amount of research already performed on biobased polyols, biobased isocyanates have received much less attention, with only a handful of examples available based on for instance soybean oil, castor oil, oleic acid and isosorbide.

Despite this progress on biobased polyols and isocyanates, the use of toxic isocyanates remains a significant barrier to producing more sustainable PU materials with better health and safety credentials. An alternative route to PU materials which has received increasing attention in recent times is the ring opening of cyclic carbonates with diamines to form polyhydroxyurethanes (PHUs) through step growth polymerization. This method is environmentally more sustainable as it avoids the use of the toxic isocyanates, can employ biobased and recyclable reaction components, and moreover enables CO₂ as a feedstock. An additional benefit is the formation of hydroxyl groups in the polymerisation reaction, which can subsequently be subjected to chemical modification to introduce new properties.

According to a recent review by Carré et al. (ChemSusChem 2019, 12, 3410-3430), only a limited number of biobased PHU materials have been developed and their properties are often not well studied or reported. The number of examples of polyhydroxyurethanes resulting from the reaction of lignin-based cyclic carbonates with polyamines is even more limited. Although PHUs formed by the aminolysis of bio-based cyclic carbonates offer an attractive alternative to conventional polyurethanes, research on petroleum-based PHUs has shown several shortcomings of this reaction, including poor reactivity at room temperature, low degrees of polymerisation and limited properties of the resulting PHUs. Ring opening of cyclic carbonates generates an additional hydroxyl group which typically leads to improved properties of the resulting hydroxyl-functionalized polyurethanes, including thermal and chemical resistance, compared to their conventional PU counterparts.

It is therefore an object of the current invention to address problems associated with conventional and biobased polyhydroxyurethanes, by providing novel lignin-based cyclic carbonates, methods to prepare them, as well as (hybrid) thermoset polymers resulting from reaction of the lignin-based cyclic carbonates with other monomers.

### SUMMARY OF THE INVENTION

According to a first aspect, the present invention provides a method to obtain a lignin-derived cyclocarbonate, said method comprising the following steps: providing a lignin-derived glycidyl ether into a reaction vessel; adding one or more ionic liquids to said reaction vessel; pressurizing the reaction vessel with carbon dioxide gas, thereby obtaining a mixture; heating said mixture to an elevated temperature.

According to an embodiment of the invention, the total amount of said one or more ionic liquids, relative to the glycidyl ether content of said lignin-derived glycidyl ether, is between about 0.1 to about 5 molar equivalents, preferably about 0.2 to about 2.5 molar equivalents, more preferably about 0.5 to about 1 molar equivalents.

According to an embodiment of the invention, at least two ionic liquids are added to said reaction vessel.

According to an embodiment of the invention, said one or more ionic liquids are selected from the list comprising: tetrabutyl ammonium bromide, tetrabutyl ammonium iodide, tetrabutyl ammonium chloride, tetrabutyl ammonium fluoride, tributylpropylammonium iodide, N-hexylisoquinolinium aspartic acid, N-octyl-N-methylmorpholinium glutamic acid, 1-butyl-3-methylimidazolium glutamic acid, 1-butyl-3-methylimidazolium aspartic acid, 1-ethyl-3-methylimidazolium bromine [EMIM][Br], 1-(2-hydroxyl-ethyl)-3-methylimdazolium bromide (HEMIMB), (triphenyl(ethyl)phosphonium bromide) (PPh₃EtBr), 1-butyl-3-methyl-imidazolium hexafluorophosphate [BMIM][PF6]; preferably tetrabutyl ammonium bromide and tetrabutyl ammonium iodide.

According to an embodiment of the invention, said reaction vessel is pressurized with carbon dioxide, at room temperature, in particular at room temperature to a pressure of between about 10 and about 80 bar, preferably between about 30 and about 50 bar.

According to an embodiment of the invention, said mixture is heated to a temperature of between about 20 and about 150 °C, preferably between about 70 and about 140 °C, more preferably between about 120 and about 130 °C.

According to an embodiment of the invention, the method comprises pressurizing the reaction vessel with carbon dioxide gas at room temperature to a pressure of between about 10 and about 80 bar, preferably between about 30 and about 50 bar, thereby obtaining a mixture and heating said mixture to a temperature of between about 20 and about 150 °C, preferably between about 70 and about 140 °C, more preferably between about 120 and about 130 °C.

According to an embodiment of the invention, said lignin-derived glycidyl ether is obtained by reaction of a lignin-derived chlorohydrin with a Brønsted base. According to a particular embodiment of the invention, the amount of said Brønsted base, relative to the chlorohydrin content of said lignin-derived chlorohydrin, is between about 0.5 to about 5 molar equivalents, preferably about 0.75 to about 3.5 molar equivalents, more preferably about 1 to about 2 molar equivalents.

According to some embodiments of the invention, said Brønsted base is selected from the list comprising: sodium hydroxide, potassium hydroxide, lithium hydroxide, sodium hydride, potassium carbonate. According to particular embodiments of the invention, said Brønsted base is sodium hydroxide.

According to another embodiment of the invention, said lignin-derived chlorohydrin is obtained by reaction of a lignin-oil with an epoxidizing agent. According to a particular embodiment of the invention, the amount of said epoxidizing agent, relative to the hydroxyl content of said lignin-oil, is between about 1 to about 50 molar equivalents, preferably about 2 to about 25 molar equivalents, more preferably about 5 to about 10 molar equivalents.

According to some embodiments of the invention, said epoxidizing agent is selected from the list comprising: epichlorohydrin, epibromohydrin. According to particular embodiments of the invention, said epoxidizing agent is epichlorohydrin.

According to yet another embodiment of the invention, said lignin-oil is obtained by depolymerization of a lignin-containing mixture.

According to a further aspect, the present invention provides a lignin-derived cyclocarbonate obtainable by embodiments of the invention.

According to yet a further aspect, the present invention provides a polymer comprising a lignin-derived cyclocarbonate according to embodiments of the invention. According to some embodiments of the invention, said polymer is selected from the list comprising: polyurethane, polycarbonate, hydroxyurethane, epoxy resin, epoxy-amine resin system, hybrid nonisocyanate urethane network, acrylic resin, latex, or any co-polymers thereof.

### BRIEF DESCRIPTION OF THE DRAWINGS

With specific reference now to the figures, it is stressed that the particulars shown are by way of example and for purposes of illustrative discussion of the different embodiments of the present invention only. They are presented in the cause of providing what is believed to be the most useful and readily description of the principles and conceptual aspects of the invention. In this regard no attempt is made to show structural details of the invention in more detail than is necessary for a fundamental understanding of the invention. The description taken with the drawings making apparent to those skilled in the art how the several forms of the invention may be embodied in practice.

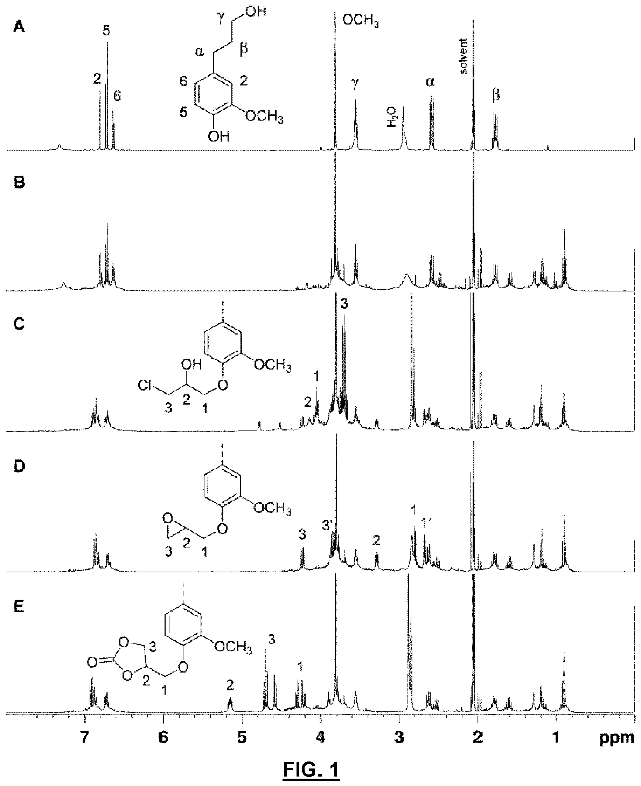

**Figure 1** shows the ¹H NMR spectrum of dihydroconiferyl alcohol (DCA) **(A)**, lignin hydrogenolysis oil (LHO) **(B)**, lignin hydrogenolysis oil chlorohydrin (LHO-CH) **(C)**, lignin hydrogenolysis oil glycidyl ether (LHO-GE) **(D)** and lignin hydrogenolysis oil cyclocarbonate (LHO-CC) **(E)**

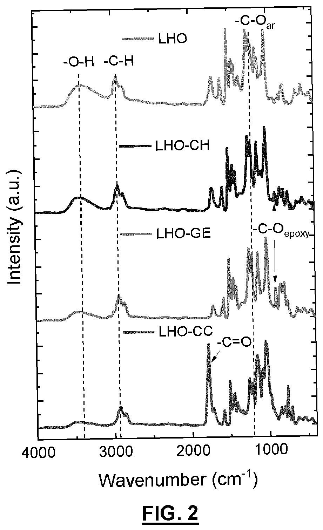

**Figure 2** shows the IR spectra of LHO, LHO-CH, LHO-GE, and LHO-CC

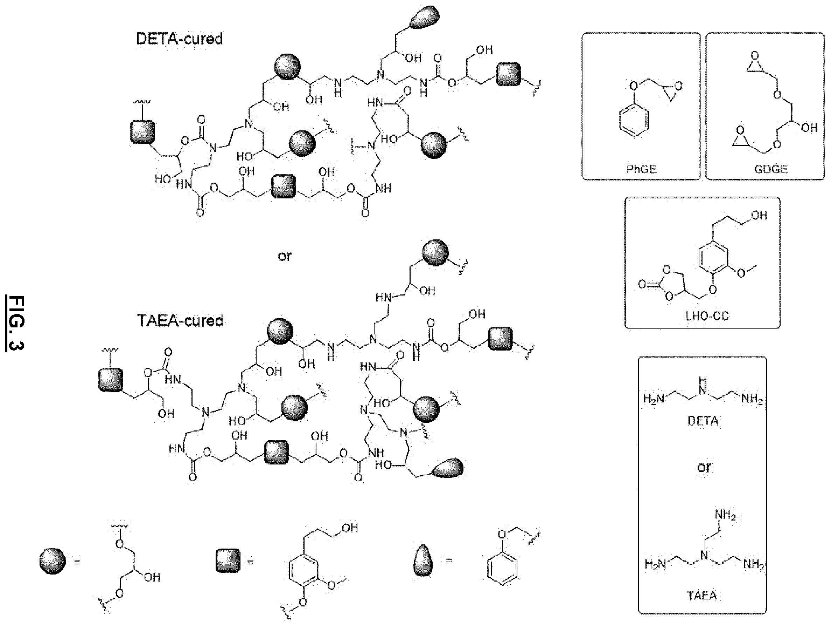

**Figure 3** shows a schematic illustration of cyclic carbonate/epoxy hybrid thermosets containing LHO-CC

### DETAILED DESCRIPTION OF THE INVENTION

The present invention will now be further described. In the following passages, different aspects of the invention are defined in more detail. Each aspect so defined may be combined with any other aspect or aspects unless clearly indicated to the contrary. In particular, any feature indicated as being preferred or advantageous may be combined with any other feature or features indicated as being preferred or advantageous.

The compounds of the present invention can be prepared according to the reaction schemes provided in the examples hereinafter, but those skilled in the art will appreciate that these are only illustrative for the invention and that the compounds of this invention can be prepared by any of several standard synthetic processes commonly used by those skilled in the art of organic chemistry.

According to a first aspect, the present invention provides a method to obtain a lignin-derived cyclocarbonate, said method comprising the following steps: providing a lignin-derived glycidyl ether into a reaction vessel; adding one or more ionic liquids to said reaction vessel; pressurizing the reaction vessel with carbon dioxide gas, thereby obtaining a mixture; heating said mixture to an elevated temperature.

The pre-fix 'lignin-derived' refers to any product or mixture of products resulting from the pretreatment, modification, functionalization, depolymerization, conversion, degradation, hydrolysis, extraction and/or dissolution of lignin, lignin-containing mixtures or lignocellulosic biomass. Typical, yet non-limiting, examples of lignocellulosic biomass are softwood, hardwood, crops, trees, bushes, grasses, agricultural residues and waste wood. Typical, yet non-limiting, lignin-containing mixtures are mixtures resulting from various (pulping) processes, such as kraft lignin, black liquor, lignosulfonates, organosolv lignins, hydrolysed lignin, soda lignin, steam exploded lignin.

The term 'ionic liquid' is to be understood as an ionic compound having an anionic and a cationic part, which is substantially liquid at the reaction temperature. Ionic liquids can for instance have a melting point at atmospheric pressure below about 200 °C, preferably below about 175 °C, and more preferably below about 150 °C.

During experiments it was surprisingly found that, contrary to the prior art regarding the cyclocarbonation of lignin-derived epoxides, very low amounts of ionic liquids, even down to catalytic amounts, were sufficient to efficiently transform lignin-derived glycidyl ethers into lignin-derived cyclocarbonates. Due to this low amount of ionic liquids, the work-up of the reaction mixture was greatly improved, resulting in a better yield of the resulting lignin-derived cyclocarbonate.

According to an embodiment of the invention, the total amount of said one or more ionic liquids, relative to the glycidyl ether content of said lignin-derived glycidyl ether, is between about 0.1 to about 5 molar equivalents, preferably about 0.2 to about 2.5 molar equivalents, more preferably about 0.5 to about 1 molar equivalents.

According to a particular embodiment of the invention, at least two ionic liquids are added to said reaction vessel. According to another particular embodiment of the invention, two ionic liquids are added to said reaction vessel. According to yet another particular embodiment of the invention, said two ionic liquids are added to said reaction vessel separately or as a mixture. According to yet another particular embodiment of the invention, three or more ionic liquids are added to said reaction vessel.

According to an embodiment of the invention, said one or more ionic liquids are each independently selected from the list comprising: tetrabutyl ammonium bromide, tetrabutyl ammonium iodide, tetrabutyl ammonium chloride, tetrabutyl ammonium fluoride, tributylpropylammonium iodide, N-hexylisoquinolinium aspartic acid, N-octyl-N-methylmorpholinium glutamic acid, 1-butyl-3-methylimidazolium glutamic acid, 1-butyl-3-methylimidazolium aspartic acid, 1-ethyl-3-methylimidazolium bromine [EMIM][Br], 1-(2-hydroxyl-ethyl)-3-methylimdazolium bromide (HEMIMB), (triphenyl(ethyl)phosphonium bromide) (PPh₃EtBr), 1-butyl-3-methyl-imidazolium hexafluorophosphate [BMIM][PF6]; preferably tetrabutyl ammonium bromide and tetrabutyl ammonium iodide.

According to a particular embodiment of the invention, the ionic liquids tetrabutyl ammonium bromide and tetrabutyl ammonium iodide are added to said reaction vessel, where the total amount of tetrabutyl ammonium bromide and tetrabutyl ammonium iodide, relative to the glycidyl ether content of said lignin-derived glycidyl ether, is between about 0.5 to about 1 molar equivalents.

The hydroxyl content of a lignin-oil refers to the molar equivalents of phenolic OH-groups as determined by quantitative ³¹P NMR spectroscopy according to the experimental protocol reported by van de Pas et al. using endo-*N*-hydroxy-5-norbornene-2,3-dicarboximide as the internal standard. Subsequently, the chlorohydrin content of a lignin-derived chlorohydrin refers to the molar equivalents of chlorohydrin moieties resulting from a quantitative transformation of a lignin-oil into a lignin-derived chlorohydrin. Finally, the glycidyl ether content of a lignin-derived glycidyl ether refers to the molar equivalents of epoxide moieties resulting from a quantitative transformation of a lignin-derived chlorohydrin into a lignin-derived glycidyl ether.

According to an embodiment of the invention, said reaction vessel is pressurized with carbon dioxide, at room temperature, to a pressure of between about 10 and about 80 bar, preferably between about 30 and about 50 bar.

According to an embodiment of the invention, said mixture, in particular said pressurized mixture is heated to a temperature of between about 20 and about 150 °C, preferably between about 70 and about 140 °C, more preferably between about 120 and about 130 °C.

According to a particular embodiment of the invention, said method comprises the following steps: providing a lignin-derived glycidyl ether into a reaction vessel; adding the ionic liquids tetrabutyl ammonium bromide and tetrabutyl ammonium iodide to said reaction vessel, where the total amount of ionic liquids, i.e. tetrabutyl ammonium bromide and tetrabutyl ammonium iodide, relative to the glycidyl ether content of said lignin-derived glycidyl ether, is between about 0.5 to about 1 molar equivalents; pressurizing the reaction vessel, preferably at room temperature, with carbon dioxide gas to a pressure of between about 30 and about 50 bar, thereby obtaining a mixture; and heating said mixture to a temperature of between about 120 and about 130 °C.

According to an embodiment of the invention, said lignin-derived glycidyl ether is obtained by reaction of a lignin-derived chlorohydrin with a Brønsted base. According to a particular embodiment of the invention, the amount of said Brønsted base, relative to the chlorohydrin content of said lignin-derived chlorohydrin, is between about 0.5 to about 5 molar equivalents, preferably about 0.75 to about 3.5 molar equivalents, more preferably about 1 to about 2 molar equivalents.

According to some embodiments of the invention, said Brønsted base is selected from the list comprising: sodium hydroxide, potassium hydroxide, lithium hydroxide, sodium hydride, potassium carbonate. According to particular embodiments of the invention, said Brønsted base is sodium hydroxide.

According to another embodiment of the invention, said lignin-derived chlorohydrin is obtained by reaction of a lignin-oil with an epoxidizing agent. According to a particular embodiment of the invention, the amount of said epoxidizing agent, relative to the hydroxyl content of said lignin-oil, is between about 1 to about 50 molar equivalents, preferably about 2 to about 25 molar equivalents, more preferably about 5 to about 10 molar equivalents. According to some embodiments of the invention, said epoxidizing agent is selected from the list comprising: epichlorohydrin, epibromohydrin. According to particular embodiments of the invention, said epoxidizing agent is epichlorohydrin.

According to yet another embodiment of the invention, said lignin-oil is obtained by depolymerization of a lignin-containing mixture.

According to a further aspect, the present invention provides a lignin-derived cyclocarbonate obtainable by embodiments of the invention.

Scheme 1 shows a non-limiting representation of the conversion steps towards the preparation of LHO-CC. For simplicity, LHO is represented as dihydroconiferyl alcohol (DCA) which is the main monomeric component of the lignin hydrogenolysis oil.

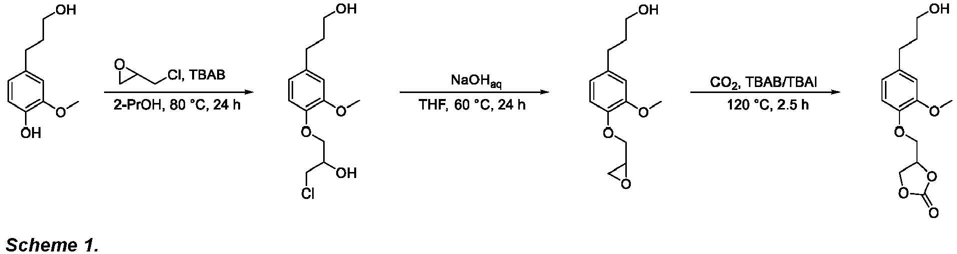

According to yet a further aspect, the present invention provides a polymer comprising a lignin-derived cyclocarbonate according to embodiments of the invention. According to some embodiments of the invention, said polymer is selected from the list comprising: polyurethane, polycarbonate, hydroxyurethane, epoxy resin, epoxy-amine resin system, hybrid nonisocyanate urethane network, acrylic resin, latex, or any co-polymers thereof.

### EXAMPLES

### Materials

Epichlorohydrin (ECH) was obtained from Advanced Biochemical (Thailand) Co., Ltd. Tetrabutylammonium iodide (TBAI), tetrabutylammonium bromide (TBAB), chromium acetylacetone, endo-*N*-hydroxy-5-norbornene-2,3-dicarboximide, pyridine, deuterated chloroform (CDCl₃), 2-chloro-4,4,5,5-tetramethyl-1,3,2-dioxaphospholane, sodium hydroxide (NaOH), magnesium sulphate (MgSO₄), glycerol digycidyl ether (GDGE, EEW = 143 g/eq), 1,2-epoxy-3-phenoxypropane, diethylenetriamine (DETA), tris(2-aminoethyl)amine (TAEA) and Pd/C (5 wt% loading) were purchased from Sigma Aldrich. Ethyl acetate (EtOAc), tetrahydrofuran (THF) and 2-propanol were obtained from Merck and used as received.

### Analysis

Total lignin content was determined in duplicate as the sum of Klason lignin (acid insoluble) and acid-soluble lignin following methods used in previous work *(*Green Chem. 2012, 14, 1447). ¹H, ¹³C, HSQC and ³¹P NMR spectra were obtained using a AVIII 400 MHz spectrometer equipped with a Prodigy 5 mm broadband probe (Bruker, Switzerland).

Hydroxyl content of the LHOs and LHOGEs was determined using quantitative ³¹P NMR spectroscopy according to the experimental protocol reported by van de Pas et al. (2014) (Holzforschung 2014, 68, 151 using endo-N-hydroxy-5-norbornene-2,3-dicarboximide as the internal standard.

Gas chromatography/mass spectrometry (GC/MS) analysis of silylated hydrogenolysis oils was performed in duplicate on a 7890B gas chromatograph equipped with a 5977B mass selective detector (Agilent, USA) using an HP-Ultra 2 capillary column. Products were quantified using silylated tert-butyl phenol as an internal standard.

Gel permeation chromatography (GPC) was performed using a Smartline GPC system (Knauer, Germany) on a column set consisting of a 3 µm SDV guard column and two 3 µm SDV 1000Å columns (Polymer Standards Service, Germany). The eluent was tetrahydrofuran at 30 °C at a flow rate of 1 mL min⁻¹. A calibration curve was constructed using oligomeric polystyrene standards (ReadyCal Kit, Polymer Standards Service, Germany) and 4-n-propyl guaiacol. Products eluting from the column system were detected by UV (254 and 280 nm) and RI detection. Results from RI detection are reported as the different hydrogenolysis reactions gave products that had varying UV responses with respect to concentration.

Chlorine content was determined by the Campbell Microanalytical Lab (Otago University, New Zealand) according to Celon and Bresadola (Microchim. Acta 1969, 57, 441).

The EEW of the epoxy resins were determined in triplicate by potentiometric titration following ASTM Standard D1652-97 (1997) scaled down to analyze 20 mg samples.

### Example 1

Pinus radiata wood was extracted with dichloromethane and milled to pass a 20-mesh screen (lignin content = 28.4 wt% based on oven dry weight).

A 4 L titanium autoclave was charged with this pre-extracted pine wood (110.0 g, 6 wt% moisture content), Pd/C catalyst (4.3 g, 4.2 wt% dry wood) and ethanol/water (1:1 v/v, 2.4 L). Stirring was set at 750 rpm. The reactor was pressurized firstly with N₂, and then H₂, to 5 bar and purged three times. The reactor was then pressurized with H₂ to ~35 bar (500 psi) and the pressure maintained over the course of the reaction by continual supply of H₂. The mixture was heated to 195 °C with stirring for 5 h. The reactor was cooled to room temperature and the reaction mixture filtered to remove unreacted wood and spent catalyst. This solid residue was washed with an ethanol/water (7:3 v/v) mixture, and the washings and filtrate combined. The solvent was evaporated under reduced pressure to give an oily product which was extracted with ethyl acetate (EtOAc) and water. The EtOAc extract was dried to constant weight to give the lignin hydrogenolysis oil (LHO) (16.8 g) as a dark amber colored oil, with a hydroxyl content = 7.73 mmol/g or 129 g/eq.

### Example 2

Forthis example, non-extracted Pinus radiata wood (0.25 < particle size < 0.5 mm, lignin content = 28.3 wt%) was used.

A 50 L stainless steel reactor was charged with non-extracted pine wood (1.375 kg, 6 wt% moisture content), Pd/C catalyst (54.3 g, 4.2 wt% dry wood) and ethanol/water (7:3 v/v, 30 L). Stirring was set at 128 rpm and the reactor was purged with N₂ and H₂ as above. The reactor was pressurized with H₂ to 21 ± 1 bar (290 psi) and the pressure maintained over the course of the reaction. The reaction mixture was heated to 196 ± 3 °C with stirring for 20 h. The cooled reaction mixture was filtered through a 212 µm sieve and glass filter paper, respectively, to recover the unreacted wood and spent catalyst. The lignin hydrogenolysis oil (LHO) was recovered as described above.

### Example 3

In a 250 mL three-neck round-bottom flask, LHO (12.02 g), epichlorohydrin (36.7 mL, 10 mol equivalence (eq.) with respect to the phenolic hydroxyl group content of LHO) and tetrabutyl ammonium bromide (4.5 g, 0.3 mol eq.) were dissolved in 2-propanol (70 mL) and stirred under reflux at 80 °C for 24 h. The mixture was cooled to 25 °C, concentrated in vacuo followed by redissolving the residue in EtOAc and extensive washing with distilled water. The organic phase was concentrated in vacuo to give the product (13.6 g) as a dark brown oil, which consisted of mainly the lignin hydrogenolysis oil chlorohydrin (LHO-CH) with a smaller amount of the lignin hydrogenolysis oil glycidyl ether (LHO-GE).

**Table 1. Various reaction conditions for the optimization of the reaction of LHO with ECH. The values were calculated with reference to the phenolic hydroxyl groups of the LHO**

| Entry | Temperature (°C) | Time (h) | TBAB (eq) | ECH (eq) | Extent of conversion (%) |
|---|---|---|---|---|---|
| 3a | 80 | 24 | 0.3 | 2.7 | 86 |
| 3b | 80 | 24 | 0.6 | 2.7 | 90 |
| 3c | 80 | 48 | 0.6 | 2.7 | 95 |
| 3d | 80 | 24 | 0.3 | 5.4 | 95 |
| 3e | 80 | 24 | 0.6 | 5.4 | 97 |
| 3f | 80 | 24 | 0.3 | 7.9 | 98 |
| 3g | 80 | 24 | 0.6 | 7.9 | 98 |
| 3h | 60 | 24 | 0.6 | 7.5 | 97 |
| 3i | 80 | 24 | 0.3 | 10 | 98 |
| 3j | 80 | 24 | 0.6 | 10 | 97 |

### Example 4

In a 1 L three-neck round-bottom flask, crude LHO-CH (12.281 g) was dissolved in THF (658 mL) and treated with an aqueous solution of NaOH (11.55 mL, 20 %, w/w) at a rate of 0.2 mL/min at 60 °C. After addition of the NaOH solution (ca. 1 h) the reaction mixture was stirred at 60 °C for a further 3 h. The solvent was stripped off under reduced pressure and the residue product was redissolved in EtOAc. The organic phase was washed with distilled water, dried over MgSO₄, and concentrated in vacuo to give the lignin hydrogenolysis oil glycidyl ether (LHO-GE) (7.682 g, 74 %) as an orange oil.

### Example 5

A stainless-steel autoclave was charged with LHO-GE (2.615 g), a mixture of TBAB and TBAI (3.23 g, 1:1 w/w). The autoclave was pressurized with CO₂ (50 bar) and finally heated to 120 °C for 2.5 h. After allowing the reaction mixture to cool down to 25 °C overnight, the residue was redissolved in EtOAc, washed with distilled water, dried over MgSO₄ and the solvent removed under reduced pressure to give the lignin hydrogenolysis oil cyclocarbonate (LHO-CC) a brown oil (2.585 g, 87 %).

### Example 6

In a 1 mL glass vial, LHO-GE or LHO-CC, GDGE (Table 1) and 0.06 g of 1,2-epoxy-3-phenoxypropane were mixed at 90 °C for around 10 min. The mixture was cooled to 25 °C and DETA or TAEA was added (Table 1). The mixture was briefly mixing with a spatula, centrifuged for 3 min at 4000 rpm, then carefully poured into a silicone mold. The resin was cured at 40 °C for 20 h and then at 120 °C for 24 h to give the biobased thermosetting materials. The ratio between LHO-CC and GDGE was varied between 1:2, 1:1 and 2:1 which corresponded to a LHO-CC content of 33, 50 and 66 wt.% with respect to GDGE (Table 1).

**Table 2. Amounts of reactants used for the preparation of the thermoset materials**

| Sample^{a} | GDGE (mg) | LHO-CC/LHO-GE (mg) | Triamine (mg)^{b} |
|---|---|---|---|
| ***LHO-CC-GDGE hybrids*** | | | |
| LHO-CC 33 - DETA | 200 | 400 | 84 |
| LHO-CC 50 - DETA | 300 | 300 | 79 |
| LHO-CC 66 - DETA | 400 | 200 | 73 |
| LHO-CC 33 - TAEA | 200 | 400 | 103 |
| LHO-CC 50 - TAEA | 300 | 300 | 99 |
| LHO-CC 66 - TAEA | 400 | 200 | 95 |
| LHO-CC 33 - TAEA 1.2 | 200 | 400 | 124 |
| LHO-CC 50 - TAEA 1.2 | 300 | 300 | 119 |
| LHO-CC 66 - TAEA 1.2 | 400 | 200 | 114 |

| ***LHO-GE-GDGE epoxies*** | | | |
|---|---|---|---|
| LHO-GE 33 - DETA | 200 | 400 | 78 |
| LHO-GE 50 - DETA | 300 | 300 | 70 |
| LHO-GE 66 - DETA | 400 | 200 | 62 |
| LHO-GE 33 - TAEA | 200 | 400 | 93 |
| LHO-GE 50 - TAEA | 300 | 300 | 83 |
| LHO-GE 66 - TAEA | 400 | 200 | 73 |

| ***Controls*** | | | |
|---|---|---|---|
| GDGE - DETA | 600 | - | 95 |
| GDGE - TAEA | 600 | - | 112 |

| | | | |
|---|---|---|---|
| ^{a}60 mg of 1,2-epoxy-3-phenoxypropane was added as a reactive diluent; ^{b}The amount of the amine was calculated by considering the active hydrogen groups of the amine towards cyclic carbonates (active hydrogen equivalent weight, or AHEW = 1) and epoxy groups (AHEW = 2). The epoxy equivalent weight (EEW) of LHO-GE was 337 g/eq, while the carbonate equivalent weight (CEW) of LHO-CC was 381 g/eq. | | | |

### Thermal properties

**Table 3. Thermal properties of LHO-CC/GDGE and LHO-GE/GDGE composites cured with DETA**

| | *T*₅ (°C) | *T*₃₀ (°C) | *Tₘₐₓ* (°C) | Ts (°C) | *Residue* (wt%) | *T*_{g} (°C) |
|---|---|---|---|---|---|---|
| Control | 193 | 295 | 307 | 145 | 14 | 38 |
| LHO-GE 33 | 254 | 304 | 298 | 149 | 15 | 44 |
| LHO-GE 50 | 256 | 310 | 302 | 152 | 19 | 49 |
| LHO-GE 66 | 262 | 313 | 300 | 153 | 18 | 52 |
| LHO-CC 33 | 244 | 304 | 286 | 149 | 17 | 39 |
| LHO-CC 50 | 240 | 307 | 291 | 150 | 22 | 48 |
| LHO-CC 66 | 236 | 308 | 301 | 151 | 20 | 45 |

**Table 4. Thermal properties of LHO-CC/GDGE and LHO-GE/GDGE composites cured with TAEA**

| Samples | Ts (°C) | *T*₃₀ (°C) | *Tₘₐₓ* (°C) | *T*ₛ (°C) | *Residue* (*Wt.* %) | *T*_{g} (°C) |
|---|---|---|---|---|---|---|
| Control | 187 | 298 | 307 | 146 | 18 | 39 |
| LHO-GE 33 | 256 | 305 | 297 | 150 | 18 | 45 |
| LHO-GE 50 | 255 | 305 | 299 | 150 | 19 | 46 |
| LHO-GE 66 | 248 | 310 | 303 | 152 | 20 | 46 |
| LHO-CC 33 | 243 | 307 | 307 | 150 | 14 | 40 |
| LHO-CC 50 | 233 | 309 | 302 | 151 | 14 | 46 |
| LHO-CC 66 | 230 | 312 | 306 | 153 | 18 | 43 |
| LHO_CC 33_1.2 | 235 | 310 | 305 | 152 | 13 | 46 |
| LHO_CC 50_1.2 | 228 | 311 | 307 | 152 | 15 | 41 |
| LHO_CC 66_1.2 | 203 | 311 | 313 | 152 | 15 | 44 |

### Mechanical properties

**Table 5. Thermomechanical and flexural properties of DETA-cured LHO-CC/GDGE and LHO-EP/GDGE composites with different mixing ratios**

| Samples^{a} | *T*_{α} (°C)^{b} | *E*' (30 °C) (GPa)^{c} | *E*' (T_{α}+30 °C) (MPa) | v (mmol·cm³)^{d} | Flexural modulus (GPa) | Flexural strength (MPa) |
|---|---|---|---|---|---|---|
| Control | 60 | 3.1 | 35 | 4.2 | 1.7 ± 1.0 | 47 ± 28 |
| LHO-GE 33 | 65 | 3.6 | 25 | 2.9 | 3.5 ± 0.3 | 94 ± 10 |
| LHO-GE 50 | 66 | 3.2 | 16 | 1.9 | 2.9 ± 0.6 | 73 ± 14 |
| LHO-GE 66 | 67 | 3.4 | 11 | 1.3 | 2.6 ± 0.4 | 66 ± 20 |
| LHO-CC 33 | 53 | 2.7 | 22 | 2.7 | 1.7 ± 0.3 | 42 ± 13 |
| LHO-CC 50 | 61 | 4.0 | 13 | 1.6 | 1.9 ± 0.6 | 53 ± 15 |
| LHO-CC 66 | 65 | 3.4 | 6.1 | 0.7 | 1.8 ± 0.4 | 59 ± 16 |

| | | | | | | |
|---|---|---|---|---|---|---|
| ^{a} (%, w/w); ^{b} Glass transition temperature; ^{c} Storage modulus; ^{d} Cross-linking density | | | | | | |

**Table 6. Thermomechanical and flexural properties of TAEA-cured LHO-CC/GDGE and LHO-GE/GDGE composites with different mixing ratios**

| Samples^{a} | *T*_{α} (°C)^{b} | *E*' (30 °C) (GPa)^{c} | *E*' (T_{α}+30 °C) (MPa) | v (mmol·cm³)^{d} | Flexural modulus (GPa) | Flexural strength (MPa) |
|---|---|---|---|---|---|---|
| Control | 60 | 2.4 | 36 | 4.3 | 2.2 ± 0.8 | 59 ± 21 |
| LHO-GE 33 | 63 | 3.8 | 59 | 4.0 | 3.6 ± 0.3 | 101 ± 2 |
| LHO-GE 50 | 64 | 3.5 | 52 | 2.5 | 3.3 ± 0.3 | 100 ± 5 |
| LHO-GE 66 | 67 | 3.6 | 56 | 2.0 | 3.5 ± 0.2 | 107 ± 8 |
| LHO-CC 33 | 57 | 3.7 | 33 | 4.0 | 2.8 ± 0.5 | 78 ± 11 |
| LHO-CC 50 | 70 | 3.3 | 16 | 1.9 | 3.7 ± 0.3 | 113 ± 7 |
| LHO-CC 66 | 71 | 3.2 | 8.9 | 1.0 | 3.2 ± 0.5 | 100 ± 16 |
| LHO-CC 33 1.2 | 83 | 4.8 | 46 | 5.2 | 4.5 ± 0.2 | 160 ± 20 |
| LHO-CC 50 1.2 | 85 | 3.7 | 27 | 3.0 | 3.9 ± 0.6 | 146 ± 19 |
| LHO-CC 66 1.2 | 74 | 3.1 | 12 | 1.4 | 3.0 ± 0.1 | 78 ± 7 |

| | | | | | | |
|---|---|---|---|---|---|---|
| ^{a} (%, w/w); ^{b} Glass transition temperature determined by DMTA; ^{c} Storage modulus; ^{d} Cross-linking density | | | | | | |

### Example 7

In a scintillation vial, LHO-CC (0.15 g, 3.4 mmol, EEW=422 g/eq), a diamine (HMDA (hexamethylene diamine), IPDA (isophorone diamine) or MXDA (m-xylene diamine)) at a 1:1.05 ratio between the cyclic carbonate and amine functionalities and in 10 mol% triazabicyclodecene (TBD) were added. The reaction was performed in a at 80 °C for 72 h followed by the precipitation in distilled water and subsequent drying of the product in vacuo for 24 h at 80 °C prior to further characterization.

**Table 7. GPC data obtained from the PHUs obtained from reaction of LHO-CC with different diamines**

| Entry | Amine:LCO-CC ratio | Diamine | *M*_{w} | *M*ₙ | PDI |
|---|---|---|---|---|---|
| 7a | 1.05 | HMDA | 3520 | 840 | 4.19 |
| 7b | 1.05 | IPDA | 1880 | 640 | 2.93 |
| 7c | 1.05 | MXDA | 2670 | 770 | 3.47 |
| 7d | 1.05 | HMDA/IPDA 1:1 | 2710 | 750 | 3.61 |
| 7e | 1.05 | HMDA/MXDA 1:1 | 3040 | 790 | 3.85 |

## Claims

1. A method to obtain a lignin-derived cyclocarbonate, said method comprising the following steps:
- providing a lignin-derived glycidyl ether into a reaction vessel;
- adding one or more ionic liquids to said reaction vessel;
- pressurizing the reaction vessel with carbon dioxide gas, thereby obtaining a mixture;
- heating said mixture to an elevated temperature.

2. The method according to claim 1, wherein the total amount of said one or more ionic liquids, relative to the glycidyl ether content of said lignin-derived glycidyl ether, is between about 0.1 to about 5 molar equivalents, preferably about 0.2 to about 2.5 molar equivalents, more preferably about 0.5 to about 1 molar equivalents.

3. The method according to any one of claims 1-2, wherein at least two ionic liquids are added to said reaction vessel.

4. The method according to any one of claims 1-3, wherein said ionic liquids are selected from the list comprising: tetrabutyl ammonium bromide, tetrabutyl ammonium iodide, tetrabutyl ammonium chloride, tetrabutyl ammonium fluoride, tributylpropylammonium iodide, N-hexylisoquinolinium aspartic acid, N-octyl-N-methylmorpholinium glutamic acid, 1-butyl-3-methylimidazolium glutamic acid, 1-butyl-3-methylimidazolium aspartic acid, 1-ethyl-3-methylimidazolium bromine [EMIM][Br], 1-(2-hydroxyl-ethyl)-3-methylimdazolium bromide (HEMIMB), (triphenyl(ethyl)phosphonium bromide) (PPh₃EtBr), 1-butyl-3-methyl-imidazolium hexafluorophosphate [BMIM][PF6]; preferably tetrabutyl ammonium bromide and tetrabutyl ammonium iodide.

5. The method according to any one of claims 1-4, wherein said reaction vessel is pressurized with carbon dioxide, at room temperature, to a pressure of between about 10 and about 80 bar, preferably between about 30 and about 50 bar.

6. The method according to any one of claims 1-5, wherein said mixture is heated to a temperature of between about 20 and about 150 °C, preferably between about 70 and about 140 °C, more preferably between about 120 and about 130 °C.

7. The method according to any one of claims 1-6, wherein said lignin-derived glycidyl ether is obtained by reaction of a lignin-derived chlorohydrin with a Brønsted base.

8. The method according to claim 7, wherein the amount of said Brønsted base, relative to the chlorohydrin content of said lignin-derived chlorohydrin, is between about 0.5 to about 5 molar equivalents, preferably about 0.75 to about 3.5 molar equivalents, more preferably about 1 to about 2 molar equivalents.

9. The method according any one of claims 7-8, wherein said Brønsted base is selected from the list comprising: sodium hydroxide, potassium hydroxide, lithium hydroxide, sodium hydride, potassium carbonate; preferably sodium hydroxide.

10. The method according to any one of claims 7-9, wherein said lignin-derived chlorohydrin is obtained by reaction of a lignin-oil with an epoxidizing agent.

11. The method according to claim 10, wherein the amount of said epoxidizing agent, relative to the hydroxyl content of said lignin-oil, is between about 1 to about 50 molar equivalents, preferably about 2 to about 25 molar equivalents, more preferably about 5 to about 10 molar equivalents.

12. The method according to any one of claims 10-11, wherein said epoxidizing agent is selected from the list comprising: epichlorohydrin, epibromohydrin; preferably epichlorohydrin.

13. A lignin-derived cyclocarbonate obtainable by the method according to any one of claims 1-6.

14. A polymer comprising a lignin-derived cyclocarbonate according to claim 13.

15. A polymer according to claim 14 selected from the list comprising: polyurethane, polycarbonate, hydroxyurethane, epoxy resin, epoxy-amine resin system, hybrid nonisocyanate urethane network, acrylic resin, latex.
